# EUROPÄISCHE PATENTSCHRIFT

(11) **EP 2 703 604 B1**
(45) Veröffentlichungstag und Bekanntmachung des Hinweises auf die Patenterteilung: **24.10.2018**
(21) Anmeldenummer: 13182033.4
(22) Anmeldetag: 28.08.2013
(51) Int. Cl.: F01D 9/02, F01D 9/04, F01D 5/14, F04D 29/54

(54) **Baugruppe einer Axialturbomaschine und Verfahren zur Herstellung einer solchen Baugruppe**
Assembly of an axial turbo engine and method for producing such an assembly
Module d'une turbomachine axiale et procédé de fabrication d'un tel module

(30) Priorität: 30.08.2012 DE 102012215412
(43) Veröffentlichungstag der Anmeldung: 05.03.2014
(73) Patentinhaber: Rolls-Royce Deutschland Ltd & Co KG, 15827 Blankenfelde-Mahlow (DE)
(72) Erfinder: Clemen, Carsten, Dr., 15749 Mittenwalde (DE)
(74) Vertreter: Maikowski & Ninnemann Patentanwälte Partnerschaft mbB

(56) Entgegenhaltungen:
- EP-A1- 0 651 207
- EP-A1- 2 194 234
- EP-A2- 1 431 516
- WO-A1-2010/063583
- US-A- 5 077 967

## Beschreibung

Die Erfindung betrifft eine Baugruppe einer Axialturbomaschine gemäß dem Oberbegriff des Patentanspruchs 1 und ein Verfahren zur Herstellung einer solchen Baugruppe. Eine derartige Baugruppe ist beispielsweise in einem Strahltriebwerk angeordnet.

Es ist bekannt, dass am Ende eines Hochdruckverdichters einer Gasturbine ein Nachleitrad angeordnet ist, dass den Drall aus der Strömung nimmt, um eine axiale Abströmung aus dem Verdichter zu ermöglichen. Bevor die Strömung einer anschließenden Brennkammer zugeführt wird, wird sie in einem Diffusor möglichst verlustarm mit dem Ziel eines maximalen Druckrückgewinns verzögert. Es ist weiter bekannt, ein solches Ausgangsleitrad und einen solchen Diffusor als ein integrales Bauteil auszubilden, dass mit der Brennkammer verbunden ist.

Aus der WO 2010/063583 A1 ist eine Axialturbomaschine bekannt, bei der ein Ringdiffusor stromab eines Nachleitrads einer Verdichterstufe angeordnet ist. Es ist vorgesehen, dass sowohl die Außenwand des Nachleitrads als auch die Außenwand des Ringdiffusors durch einen Leitschaufelträger gebildet sind, so dass der Ringdiffusor am Nachleitrad befestigt ist.

Die EP 1 431 516 A2 beschreibt eine Baugruppe gemäß dem einleitenden Teil des Anspruchs 1 mit einer Diffusoranordnung, bei der ein Nachleitrad und ein Diffusor fest und unmittelbar miteinander verbunden sind.

Es besteht ein Bedarf, Baugruppen der genannten Art mit geringen Toleranzen auszubilden, um negative Einflüsse auf die Strömungsumlenkung im Nachleitrad und Druckverluste zu vermeiden.
Dementsprechend liegt der vorliegenden Erfindung die Aufgabe zu Grunde, eine Baugruppe einer Axialturbomaschine mit einem Nachleitrad und einem Verdichter bereitzustellen, bei der zumindest das Nachleitrad mit geringen Toleranzen ausgeführt ist. Des weiteren soll ein Verfahren zur Herstellung einer solchen Baugruppe bereitgestellt werden.
Diese Aufgabe wird erfindungsgemäß durch eine Baugruppe mit den Merkmalen des Anspruchs 1 und ein Verfahren mit den Merkmalen des Anspruchs 12 gelöst. Ausgestaltungen der Erfindung sind in den Unteransprüchen angegeben.
Danach ist vorgesehen, dass mindestens ein Nachleitrad der Baugruppe mit dem Verdichter und der Diffusor mit der Brennkammer verbunden ist, ohne dass zwischen dem Diffusor und dem Nachleitrad eine unmittelbare mechanische Verbindung besteht. Hierzu ist zwischen dem Nachleitrad und dem Diffusor in Strömungsrichtung ein Leckagespalt ausgebildet. Die erfindungsgemäße Lehre sieht somit vor, dass mindestens ein Nachleitrad und der Diffusor separate Bauteile sind, die mit unterschiedlichen strukturellen Komponenten, nämlich zum einen dem Verdichter, nämlich einem Außengehäuse des Verdichters, und zum anderen der Brennkammer verbunden sind.
Es kann vorgesehen sein, dass der Leckagespalt gezielt zum Ableiten von Leckageluft verwendet wird. Dabei ist es bekannt, hinter einem Verdichter entnommene Leckageluft einer hinter der Brennkammer angeordneten Turbine als Kühlluft zuzuführen.

Es wird darauf hingewiesen, dass die erfindungsgemäße Baugruppe mehrere Nachleiträder aufweisen kann, wobei jedes Nachleitrad genau eine Schaufelreihe umfasst. Dabei ist es nicht erforderlich, dass jedes solcher Nachleiträder ein vom Diffusor separates Teil darstellt. Die vorliegende Erfindung verlangt lediglich, dass mindestens ein Nachleitrad mit dem Verdichter verbunden und ohne unmittelbare mechanische Verbindung mit dem Diffusor ausgebildet ist. Dies kann aber auch für die weiteren Nachleiträder gelten, sofern mehr als ein Nachleitrad vorhanden ist.

Die erfindungsgemäße Lösung ist mit dem Vorteil verbunden, dass durch die getrennte Ausbildung mindestens eines Nachleitrads einerseits und des Diffusors anderseits das mindestens eine Nachleitrad und der Diffusor als separate bauliche Einheiten herstellbar sind. Hierdurch wird eine präzise Fertigung insbesondere des Nachleitrads ermöglicht. Dadurch kann eine höhere Güte des Nachleitrades beispielsweise im Bezug auf Oberfläche und Geometrie erreicht werden, mit dem Vorteil verringerter Nachleitradverluste und einer verbesserten Strömungsumlenkung. Die erfindungsgemäße Trennung zwischen Nachleitrad einerseits und Diffusor anderseits ermöglicht des Weiteren eine Flexibilität der Materialwahl insofern, als Nachleitrad und Diffusor nicht aus dem gleichen Material bestehen müssen. Des Weiteren kann der Diffusor kostengünstig gefertigt werden.

Die Herstellung des Nachleitrades kann beispielsweise durch Erodieren, Schleifen, Fräsen, Sintern oder elektrochemisches Abtragen (ECM) erfolgen. Der Diffusor wird beispielsweise als Gussteil hergestellt, wobei auch der Diffusor in anderer Weise herstellbar ist, beispielsweise gemäß den genannten Herstellungsverfahren.

Die erfindungsgemäße Lösung stellt die Möglichkeit bereit, eine Verbesserung der Nachleitrad- und Diffusorströmung zu erreichen, indem ein Leckagespalt, der im Stand der Technik unmittelbar hinter der letzten Rotorstufe ausgebildet ist, erfindungsgemäß zwischen dem Nachleitrad und dem Diffusor bereitgestellt wird. Alternativ kann auch vorgesehen sein, dass ein solcher zwischen Nachleitrad und Diffusor ausgebildeter Leckagespalt zusätzlich zu einem unmittelbar hinter der letzten Rotorstufe ausgebildeten Leckagespalt eingesetzt wird. Bei einer einseitigen Einspannung der Schaufelreihe des Nachleitrades besteht darüber hinaus die Möglichkeit, eine Verbesserung der Nachleitrad- und Diffusorströmung durch Nutzung von Nabenspalten zu erreichen.

Ein Nachleitrad wird auch als Ausgangsleitrad oder OGV ("Outlet Guide Vane") bezeichnet. Ein solches Nachleitrad wird üblicherweise durch die Statorstufe der letzten Verdichterstufe eines Verdichters bereitgestellt. Der Diffusor besitzt die Aufgabe, die Geschwindigkeit der aus dem Verdichter kommenden Luft zu reduzieren. Dabei wird die kinetische Energie der Strömung in eine statische Druckerhöhung gewandelt und die Luft der Brennkammer möglichst gleichmäßig verteilt zugeführt.

Gemäß der Erfindung ist das Nachleitrad mit einem Außengehäuse des Verdichters verbunden. Ein solches Außengehäuse ist ein Strukturelement des Verdichters, an dem die Statorstufen weiterer Verdichterstufen des Verdichters befestigt sind.

Der Diffusor ist in einem Ausführungsbeispiel mit einem inneren Brennkammergehäuse der Brennkammer verbunden. Grundsätzlich kann der Diffusor jedoch auch mit jedem anderen eingangsseitig der Brennkammer verbundenen strukturellen Bauelement der Brennkammer verbunden sein.

Gemäß einer Ausgestaltung der Erfindung ist das Nachleitrad mit einem Nabenspalt ausgebildet, der zwischen den Schaufelenden des Nachleitrads und der Nabe des Nachleitrads verläuft. Die Schaufelenden sind gemäß diesem Ausführungsbeispiel einseitig eingespannt. Der dabei entstehende Nabenspalt kann dazu verwendet werden, die Nachleitrad- und Diffusorströmung in günstiger Weise zu beeinflussen, gegebenenfalls in Verbindung mit dem zwischen dem Nachleitrad und dem Diffusor ausgebildeten Leckagespalt.

Da die Schaufelenden des Nachleitrads beabstandet zur Nabe des Nachleitrads ausgebildet sind, kann in einer Weiterbildung dieses Ausführungsbeispiels vorgesehen sein, dass die Nabe des Nachleitrads mit der Rotornabe oder der Rotorscheibe eines in Strömungsrichtung vor dem Nachleitrad angeordneten Rotors verbunden ist. Die Nabe ist somit rotierend ausgebildet.

Gemäß einer alternativen Ausgestaltung ist das Nachleitrad ohne Nabenspalt zwischen den Schaufelenden des Nachleitrads und der Nabe des Nachleitrads ausgebildet. Die Nabe des Nachleitrads bildet in diesem Fall einen integralen Bestandteil des Nachleitrads. Für diesen Fall kann vorgesehen sein, dass die Baugruppe zusätzlich ein Deckband umfasst, das ein Leckagespalt zwischen einem in Strömungsrichtung vor dem Nachleitrad angeordneten Rotor und dem Nachleitrad zumindest teilweise verschließt. Bei Anordnung eines solchen Deckbandes kann Leckageluft ausschließlich durch den zwischen Nachleitrad und Diffusor ausgebildeten Leckagespalt abströmen.

Gemäß einer weiteren Ausgestaltung der vorliegenden Erfindung umfasst die Baugruppe mindestens zwei Nachleiträder, die in Tandemanordnung, das heißt unmittelbar hintereinander in Strömungsrichtung angeordnet sind. Dabei bildet jedes Nachleitrad genau eine Schaufelreihe aus.

Gemäß einer Ausführungsvariante sind die zwei Nachleiträder jeweils als gesonderte Teile hergestellt und miteinander verschweißt und/oder verschraubt. Ein Verschrauben erfolgt beispielsweise über Flanschverbindungen. Beide Nachleiträder sind dabei mit dem Verdichter verbunden, während der Diffusor mit der Brennkammer verbunden ist. Dabei kann vorgesehen sein, dass beide Nachleiträder am Außengehäuse des Verdichters befestigt sind, während die Nabe der Nachleiträder mit der Rotornabe oder mit der Rotorscheibe eines in Strömungsrichtung vor den Nachleiträdern angeordneten Rotors verbunden ist, sodass die Nabe wiederum rotierend ausgebildet ist. Dabei befindet sich zwischen den Schaufelenden der Nachleiträder und der Nabe ein Nabenspalt.

Gemäß einer alternativen Ausführungsvariante sind nur eines oder einige der mindestens zwei Nachleiträder mit dem Verdichter verbunden, während mindestens ein Nachleitrad mit dem Diffusor verbunden oder einstückig mit diesem ausgebildet ist. Im Falle zweier Nachleiträder ist somit das eine Nachleitrad dem Verdichtermodul und das andere Nachleitrad dem Brennkammermodul zugeordnet. Der Leckagespalt befindet sich für diesen Fall zwischen den beiden Nachleiträdern. Dabei kann vorgesehen sein, dass das mit dem Diffusor verbundene Nachleitrad zusammen mit diesem als kostengünstiges Gussteil ausgebildet wird, während das dazu stromauf liegende, mit dem Verdichter verbundene Nachleitrad mit hoher Präzision beispielsweise durch Fräsen oder Schmieden ausgebildet ist.

Eine Ausführungsvariante der vorliegenden Erfindung sieht vor, dass in den Diffusor Streben zur Aufnahme mechanischer Lasten integriert sind. Solche Streben werden auch als "Struts" bezeichnet. Sie dienen allgemein der Aufnahme struktureller oder mechanischer Lasten und verbinden insbesondere den inneren und den äußeren Diffusorring. Auf Streben kann jedoch verzichtet werden, wenn ein mit dem Diffusor verbundenes Nachleitrad eine ausreichende strukturelle Stärke aufweist, um auch mechanische Lasten aufzunehmen. Dementsprechend sieht eine Ausgestaltung der Erfindung vor, dass das mindestens eine mit dem Diffusor verbundene oder einstückig mit diesem ausgebildete Nachleitrad selbst die Streben ausbildet und dabei zur Aufnahme mechanischer Lasten geeignet ist. Die Schaufeln des Nachleitrads erfüllen somit zusätzlich zu ihrer aerodynamischen Funktion die Funktion der Aufnahme mechanischer Lasten.

Des Weiteren kann vorgesehen sein, dass die Streben ein aerodynamisches Profil aufweisen und eine weitere Umlenkung des Luftstroms vornehmen. Eine solche Ausgestaltung der Streben stellt insbesondere dann eine Option dar, wenn nur ein einziges Nachleitrad mit einer Schaufelreihe vorgesehen ist, das mit dem Verdichter verbunden ist. Durch Bereitstellen von Streben mit einem aerodynamischen Profil kann die Luft vor Eintreten in die Brennkammer eine weitere Ausrichtung in axialer Richtung erfahren.

Die Erfindung betrifft des weiteren ein Verfahren zur Herstellung einer Baugruppe einer Axialturbomaschine, die mindestens ein Nachleitrad eines Verdichters und einen in Strömungsrichtung hinter dem Nachleitrad angeordneten Diffusor umfasst. Das Verfahren umfasst die Schritte:
- getrenntes Herstellen mindestens eines Nachleitrads und des Diffusors, und
- Verbinden des mindestens eines Nachleitrads mit dem Verdichter und Verbinden des Diffusors mit der Brennkammer, ohne dass zwischen dem Diffusor und dem Nachleitrad eine unmittelbare mechanische Verbindung besteht.

Das Nachleitrad wird bevorzugt mit hoher Güte beispielsweise durch Erodieren, Schleifen, Fräsen, Sintern oder elektrochemisches Abtragen (ECM) hergestellt. Der Diffusor wird in einem Ausführungsbeispiel als kostengünstiges Gussteil hergestellt.

Die Erfindung wird nachfolgend unter Bezugnahme auf die Figuren der Zeichnung anhand mehrerer Ausführungsbeispiele näher erläutert. Es zeigen:
- Figur 1: ein erstes Ausführungsbeispiel einer Baugruppe mit mindestens einem Nachleitrad und einem Diffusor, wobei das Nachleitrad mit einem Verdichter und der Diffusor mit einer Brennkammer verbunden sind, und wobei die Baugruppe ein Deckband zwischen einer Rotorstufe und dem Nachleitrad umfasst;
- Figur 2: eine Baugruppe mit einem Nachleitrad und einem Diffusor gemäß der Figur 2 ohne die Verwendung eines Deckbandes;
- Figur 3: ein weiteres Ausführungsbeispiel einer Baugruppe mit mindestens einem Nachleitrad und einem Diffusor, wobei die Schaufeln des Nachleitrads einseitig unter Ausbildung eines Nabenspaltes eingespannt sind;
- Figur 4: ein weiteres Ausführungsbeispiel einer Baugruppe mit mindestens einem Nachleitrad und einem Diffusor, wobei zwei Nachleiträder in Tandemanordnung und ein Deckband vorgesehen sind;
- Figur 5: ein weiteres Ausführungsbeispiel einer Baugruppe mit mindestens einem Nachleitrad und einem Diffusor, wobei zwei Nachleiträder in Tandemanordnung ohne die Verwendung eines Deckbands vorgesehen sind;
- Figur 6: ein weiteres Ausführungsbeispiel einer Baugruppe mit mindestens einem Nachleitrad und einem Diffusor, wobei zwei Nachleiträder in Tandemanordnung mit einseitiger Einspannung ihrer Schaufeln und unter Ausbildung eines Nabenspaltes vorgesehen sind;
- Figur 7: ein weiteres Ausführungsbeispiel einer Baugruppe mit mindestens einem Nachleitrad und einem Diffusor, wobei die Baugruppe zwei Nachleiträder in Tandemanordnung umfasst, von den eines mit dem Verdichter und das andere mit dem Diffusor verbunden ist, und wobei das mit dem Verdichter verbundene Nachleitrad mit einseitiger Einspannung seiner Schaufeln und unter Ausbildung eines Nabenspaltes ausgebildet ist;
- Figur 8: eine Baugruppe entsprechend der Figur 7, wobei jedoch das mit dem Verdichter verbundene Nachleitrad mit beidseitiger Einspannung seiner Schaufeln ausgebildet und zusätzlich ein Deckband vorgesehen ist;
- Figur 9: eine Baugruppe entsprechend der Figur 7, jedoch ohne in den Diffusor integrierte Streben;
- Figur 10: eine Baugruppe entsprechend der Figur 8, wobei auf ein mit dem Verdichter verbundenes Nachleitrad verzichtet und dessen Funktionalität in die Streben des Diffusors integriert ist;
- Figur 11: in vereinfachter Darstellung ein Ausführungsbeispiel eines Strahltriebwerks, in das eine erfindungsgemäße Baugruppe integriert ist; und
- Figur 12: eine Baugruppe mit einem Nachleitrad und einem Verdichter gemäß dem Stand der Technik.

Die Erfindung wird nachfolgend beispielhaft anhand einer in ein Strahltriebwerk integrierten Baugruppe beschrieben. Die Prinzipien der vorliegenden Erfindung gelten jedoch in gleicher Weise für andere Axialturbomaschinen.

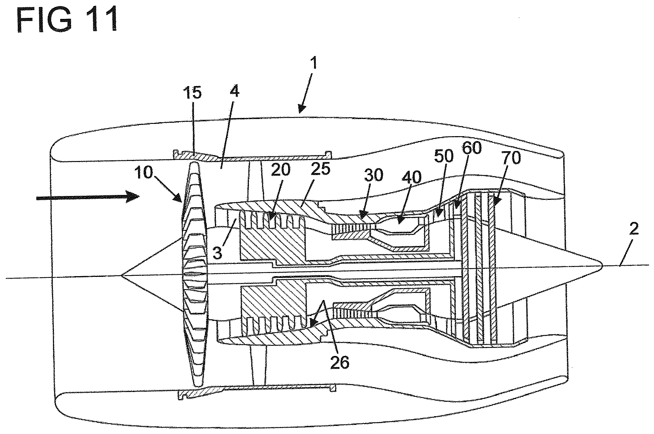

Die Figur 11 zeigt ein Ausführungsbeispiel eines Zweistrom-Strahltriebwerkes 1, das in an sich bekannter Weise eine Fanstufe 10 mit einem Fan als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist. Der Mitteldruckverdichter 20 und der Hochdruckverdichter 30 weisen jeweils eine Mehrzahl von Verdichterstufen auf, die jeweils eine Rotorstufe und eine Statorstufe umfassen.

Die Fanstufe 10 weist ein Fangehäuse 15 auf, das innenseitig eine Ringraumfläche aufweist, die einen Sekundärstromkanal 4 des Strahltriebwerkes 1 radial außen begrenzt. Der Mitteldruckverdichter 20 und der Hochdruckverdichter 30 sind von einem Umfangsgehäuse 25 umgeben. Dieses weist innenseitig eine Ringraumfläche 26 auf, die den Strömungskanal 3 für den Primärstrom des Strahltriebwerkes radial außen begrenzt. Radial innen ist der Strömungskanal 3 durch entsprechende Kranzoberflächen der Rotoren und Statoren der jeweiligen Verdichterstufen bzw. durch die Nabe oder durch mit der Nabe verbundene Elemente der entsprechenden Antriebswelle gebildet. Der Strömungskanal 3 für den Primärstrom wird auch als Ringraum und die Fläche 26 als Ringraumfläche bezeichnet.

Die beschriebenen Komponenten besitzen eine gemeinsame Symmetrieachse 2, die die Mittelachse für die Statorstufen und die Gehäuse sowie die Rotationsachse für die Rotorstufen des Strahltriebwerks darstellt.

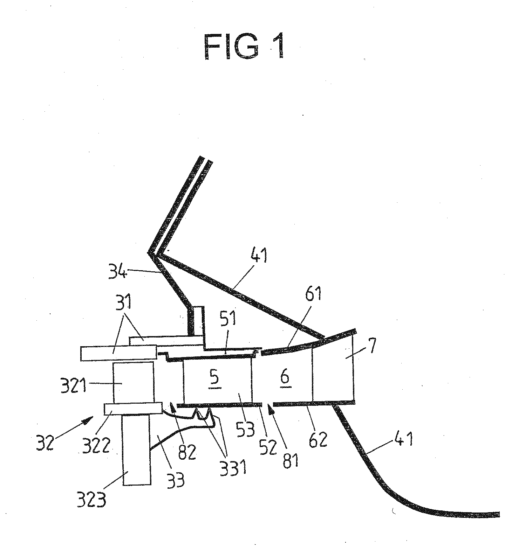

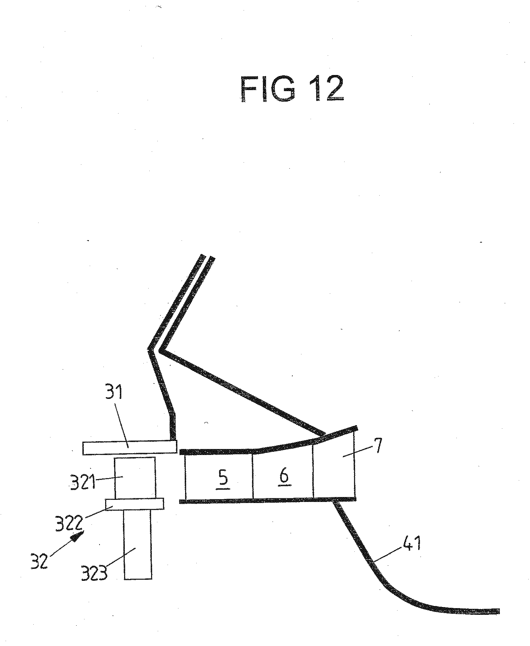

Im Kontext der vorliegenden Erfindung ist der Übergangsbereich zwischen dem Hochdruckverdichter 30 und der Brennkammer 40 von besonderer Bedeutung, in dem ein Nachleitrad und ein Diffusor ausgebildet sind. Bevor die Erfindung anhand der Figuren 1 bis 10 im Einzelnen erläutert wird, wird zum besseren Verständnis der Erfindung unter Bezugnahme auf die Figur 12 kurz auf den Stand der Technik eingegangen.

Die Figur 12 zeigt eine Baugruppe, die ein Nachleitrad 5 und einen Diffusor 6 umfasst, wobei der Diffusor mit Streben 7, die der Aufnahme mechanischer Lasten dienen, ausgebildet ist. Das Nachleitrad 5 und der Diffusor 6 bilden ein integrales Bauteil, das beispielsweise als kostengünstiges Gussteil ausgebildet ist. Das integrale Bauteil ist strukturell mit einem inneren Brennkammergehäuse 41 der Brennkammer der Axialturbomaschine verbunden. Dementsprechend ist das das Nachleitrad 5 und den Diffusor 6 umfassende Bauteil physisch von einem stromauf liegenden Axialverdichter getrennt, von dem in der Figur 12 ein Verdichtergehäuse 31 sowie die letzte Rotorstufe 32 mit einem Rotor 321, einer Rotornabe 322 und einer Rotorscheibe 323 dargestellt ist.

Die Figur 1 zeigt ein erstes Ausführungsbeispiel der vorliegenden Erfindung.

Die in der Figur 1 dargestellte Baugruppe umfasst ein Nachleitrad 5 und einen in Strömungsrichtung hinter dem Nachleitrad 5 angeordneten Diffusor 6. Das Nachleitrad 5 ist mit einem Verdichtergehäuse 31 verbunden. Der Diffusor 6 ist mit einem inneren Brennkammergehäuse 41 einer ansonsten nicht dargestellten Brennkammer verbunden. Zwischen dem Diffusor 6 und dem Nachleitrad 5 besteht dabei keine unmittelbare mechanische Verbindung. Dementsprechend ist zwischen dem Nachleitrad 5 und dem Diffusor 6 ein Leckagespalt 81 ausgebildet.

Das Nachleitrad 5 umfasst ein äußeres Gehäuse 51 (das auch als Gehäusering bezeichnet werden kann), eine dazu radial innen liegende Nachleitradnabe 52 und einen Schaufelring 53, der im Ausführungsbeispiel der Figur 1 beidseitig, d. h. sowohl an dem äußeren Gehäuse 51 als auch an der Nachleitradnabe 52 eingespannt ist. Dabei ist das äußere Gehäuse 51 mechanisch mit dem Verdichtergehäuse 31 verbunden oder bildet das äußere Gehäuse 51 einen Teil des Verdichtergehäuses 31. Das Verdichtergehäuse 31 ist über strukturelle Elemente 34 mit dem inneren Brennkammergehäuse 41 mechanisch verbunden.

Der Diffusor 6 umfasst einen äußeren Diffusorring 61 und einen inneren Diffusorring 62. Des Weiteren können in den Diffusor Streben 7 (auch als "Struts" bezeichnet) integriert sein, wie es in der Figur 1 der Fall ist. Dabei befinden sich die Streben 7 beispielsweise am stromabwärts gelegenen Ende des Diffusors 6. Sie verbinden den äußeren Diffusorring 61 mit dem inneren Diffusorring 62 und ermöglichen dadurch die Aufnahme mechanischer Lasten. Solche Streben 7 sind jedoch lediglich optional, wenn andere Bauteile zur Aufnahme mechanischer Lasten vorhanden sind.

Die axiale Strömung verläuft in der Baugruppe zwischen der Rotornabe 322 und dem Verdichtergehäuse 31, zwischen der Nachleitradnabe 52 und dem äußeren Gehäuse 51 sowie zwischen dem inneren Diffusorring 62 und dem äußeren Diffusorring 61. Das Nachleitrad 5 dient dazu, den Drall aus der Strömung zu nehmen und diese axial auszurichten. Im Diffusor 6 wird die kinetische Energie der Strömung in eine statische Druckerhöhung gewandelt und die Strömung anschließend der Brennkammer zugeführt.

Im Ausführungsbeispiel der Figur 1 ist ein Leckagespalt 82, der sich zwischen dem Rotor 32 und dem Nachleitrad 5 befindet, durch ein Deckband 33, das zwei an der Nachleitradnabe 52 anliegende Dichtlippen 331 umfasst, abgedichtet. Leckageluft für eine Kühlung der Hochdruckturbine des Strahltriebwerks wird somit allein dem Leckagespalt 81 entnommen.

Der Diffusor 6 mit den Streben 7 ist beispielsweise als kostengünstiges Gussteil ausgebildet. Das Nachleitrad 5 dagegen ist mit einer hohen Güte in Bezug auf Fertigungstoleranzen, Geometrie und Oberflächenbeschaffenheit ausgebildet, so dass nur geringe Nachleitradverluste und eine verbesserte Strömungsumlenkung vorliegen. Hierzu ist das Nachleitrad beispielsweise durch Schmieden, Fräsen, Sintern, Erodieren oder Schleifen hergestellt.

Das Nachleitrad kann dabei als einstückiges Teil ausgebildet sein, das sowohl die Schaufelreihe 53, das äußere Gehäuse 51 und die Nachleitradnabe 52 umfasst. Alternativ kann ebenfalls vorgesehen sein, dass einzelne Elemente des Nachleitrads 5, beispielsweise die Schaufelreihe 53 oder die Schaufelreihe 53 in Verbindung mit dem äußeren Gehäuse 52 gesondert hergestellt und dann mit anderen Teilen des Nachleitrads 5 verbunden werden, wobei eine solche Verbindung entweder vorab unter Bereitstellung einer Unterbaugruppe oder bei Verbindung mit dem Verdichter erfolgen kann.

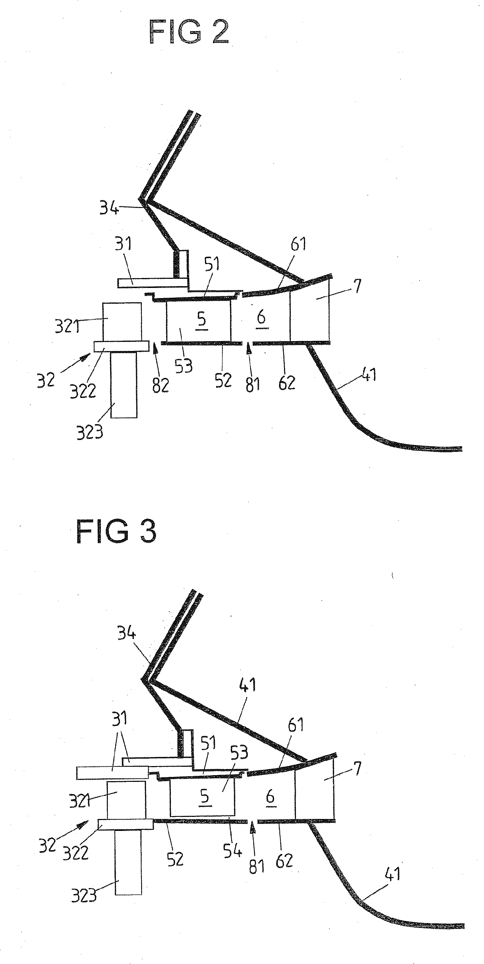

Die Figur 2 zeigt ein weiteres Ausführungsbeispiel einer Baugruppe mit einem Nachleitrad 5 und einem Diffusor 6, die als separate Bauteile ohne unmittelbare Verbindung miteinander ausgebildet sind. Das Ausführungsbeispiel der Figur 2 unterscheidet sich vom Ausführungsbeispiel der Figur 1 dadurch, dass auf ein Deckband 33 (vgl. Figur 1) verzichtet wird. Dementsprechend kann Leckageluft sowohl durch den Leckagespalt 82 zwischen dem Rotor 32 und Nachleitrad 5 als auch durch den Leckagespalt 81 zwischen dem Nachleitrad 5 und Diffusor 6 entweichen. Durch die Kombination der beiden Leckagespalte 81, 82 kann der Leckagestrom beeinflusst und verbessert eingestellt werden.

Die Figur 3 zeigt ein Ausführungsbeispiel einer Baugruppe mit einem Nachleitrad 5 und einem Diffusor 6, das sich von dem Ausführungsbeispiel der Figuren 1 und 2 dadurch unterscheidet, dass anders als bei den Figuren 1 und 2 die Schaufeln 53 des Nachleitrads nicht beidseitig eingespannt sind, sondern nunmehr lediglich einseitig. So sind die Schaufeln 53 lediglich mit dem äußeren Gehäuse 51 des Nachleitrads 5 verbunden. Die Nachleitradnabe 52 ist nun Teil der Rotornabe 322 oder der Rotorscheibe 323. Sie ist beispielsweise als integrales Bauteil mit der Rotornabe 322 oder der Rotorscheibe 323 ausgebildet oder mit einer solchen verschraubt oder verschweißt. Die Nabe 52 des Nachleitrads 5 ist dementsprechend rotierend ausgebildet.

Zwischen den Enden der Schaufeln 53 des Nachleitrads 5 und der Nabe 52 verläuft notwendigerweise ein Spalt 54, der als Nabenspalt bezeichnet wird. Dieser Nabenspalt 54 ist bevorzugt möglichst eng ausgebildet. Alternativ kann der Nabenspalt 54 dazu genutzt werden, gezielt Luft dem Leckagespalt 81 zuzuführen.

Es wird darauf hingewiesen, dass bei dem Ausführungsbeispiel der Figur 3 der in den Figuren 1 und 2 vorhandene Leckagespalt 82 zwischen Rotorstufe 32 und Nachleitrad 5 automatisch aufgrund der Verbindung zwischen der Nachleitradnabe 52 und der Rotornabe 322 verschlossen ist.

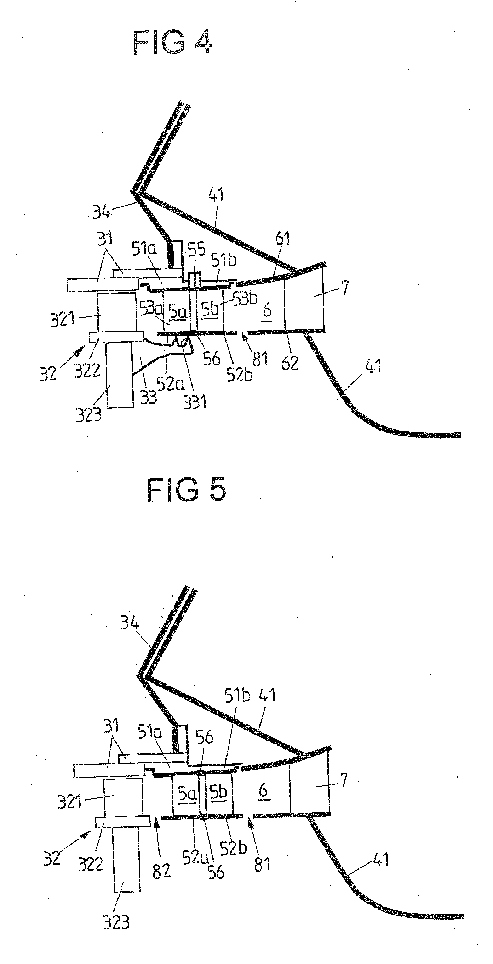

Die nachfolgenden Figuren 4 bis 9 zeigen Ausführungsbeispiele einer Baugruppe, die jeweils zwei in Tandemanordnung in Strömungsrichtung hintereinander angeordnete Nachleiträder 5a, 5b umfasst, wobei jedes Nachleitrad eine Schaufelreihe 53a, 53b umfasst. Eine solche Tandem-Anordnung ist mit dem Vorteil verbunden, dass beim Umlenken der Strömung geringere Strömungsverluste auftreten. Hierzu wird ein definierter tangentialer und axialer Abstand zwischen den jeweiligen Schaufeln der Schaufelreihen der beiden Nachleiträder 5a, 5b eingestellt. Durch getrennte Herstellung und Ausbildung der Nachleiträder 5a, 5b als gesonderte Teile wird eine exakte Herstellung der Nachleiträder 5a, 5b bei geringen Toleranzen ermöglicht.

Gemäß dem Ausführungsbeispiel der Figur 4, das bis auf den Umstand der Verwendung zweier Nachleiträder 5a, 5b weitgehend dem Ausführungsbeispiel der Figur 1 entspricht, sind zwei Nachleiträder 5a, 5b vorgesehen, die jeweils ein äußeres Gehäuse 51a, 51b, eine Nabe 52a, 52b und Schaufeln 53a, 53b aufweisen. Die beiden Nachleiträder 5a, 5b sind als gesonderte Teile hergestellt und über Flanschverbindungen 55 und/oder Schweißverbindungen 56 miteinander verschweißt. Im Ausführungsbeispiel der Figur 4 ist dabei vorgesehen, dass die Naben 52a, 52b der beiden Nachleiträder 5a, 5b miteinander verschweißt und die beiden äußeren Gehäuse 51a, 51b der Nachleiträder 5a, 5b über eine Flanschverbindung 55 miteinander verbunden sind. Diese Verbindungsarten sind jedoch nur beispielhaft zu verstehen. Insbesondere kann eine Verbindung in beiden Verbindungsbereichen über Schweißen oder über Flanschverbindungen erfolgen.

Es wird darauf hingewiesen, dass im Ausführungsbeispiel der Figur 4, ähnlich wie im Ausführungsbeispiel der Figur 1, ein Deckband 33 mit Dichtlippen 331 vorgesehen ist, das einen Leckagespalt zwischen dem Rotor 32 und dem in Strömungsrichtung ersten Nachleitrad 5a abdeckt.

Im Ausführungsbeispiel der Figur 4 sind beide Nachleiträder 5a, 5b strukturell mit dem Verdichter verbunden, während der Diffusor 6 strukturell mit der Brennkammer verbunden ist. Insofern bestehen keine Unterschiede zu den Ausführungsbeispielen der Figuren 1 bis 3.

Die Figur 5 zeigt ein Ausführungsbeispiel einer Baugruppe, das sich von dem Ausführungsbeispiel der Figur 4 durch den Umstand unterscheidet, dass zwischen Rotor 32 und Tandem-Nachleitrad 5a, 5b kein Deckband (vgl. Deckband 33 der Figur 4) vorgesehen ist. Dementsprechend sind, ähnlich wie im Ausführungsbeispiel der Figur 2, zwei Leckagespalte 81, 82 zur Bereitstellung von Leckageluft vorgesehen. Die Verbindung zwischen den als separate Bauteile gebildeten Nachleiträdern 5a, 5b erfolgt in der Figur 5 durch zwei Schweißverbindungen 56.

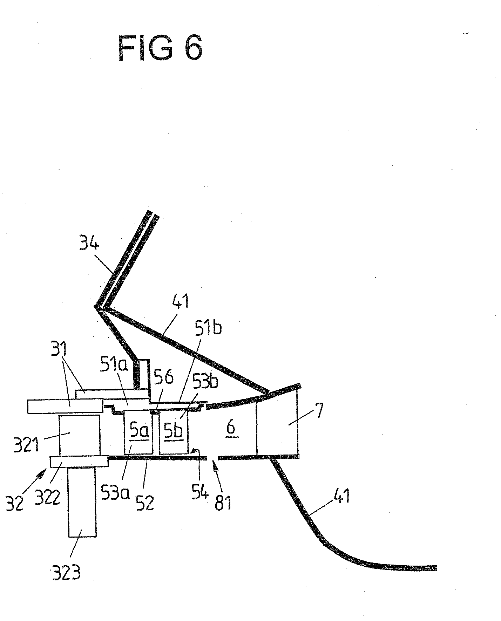

Die Figur 6 zeigt ein alternatives Ausführungsbeispiel, bei dem, ähnlich wie beim Ausführungsbeispiel der Figur 3, die Leitradschaufeln 53a, 53b einseitig eingespannt sind und dementsprechend zwischen den Enden der Leitradschaufeln 53a, 53b und der Nabe 52 ein Nabenspalt 54 ausgebildet ist. Die Nachleitradnabe 52 ist dabei gemeinsam für beide Nachleiträder 5a, 5b ausgebildet und mit der Rotornabe 322 oder der Rotorscheibe 323 verbunden, so dass die Nachleitradnabe 52 zusammen mit dem Rotor 32 rotiert. Im Bereich der äußeren Gehäuse 51a, 51b sind die Nachleiträder 5a, 5b der Tandemanordnung mittels einer Schweißverbindung 56 miteinander verbunden.

Die Ausbildung der Leitradschaufeln 53a, 53b in einseitiger Einspannung am äußeren Gehäuse 51a, 51b mit der Ausbildung von freien Enden der Schaufeln 53a, 53b angrenzend an den Nabenspalt 54 ist mit dem Vorteil einer einfacheren Herstellbarkeit der Schaufeln 53a, 53b verbunden.

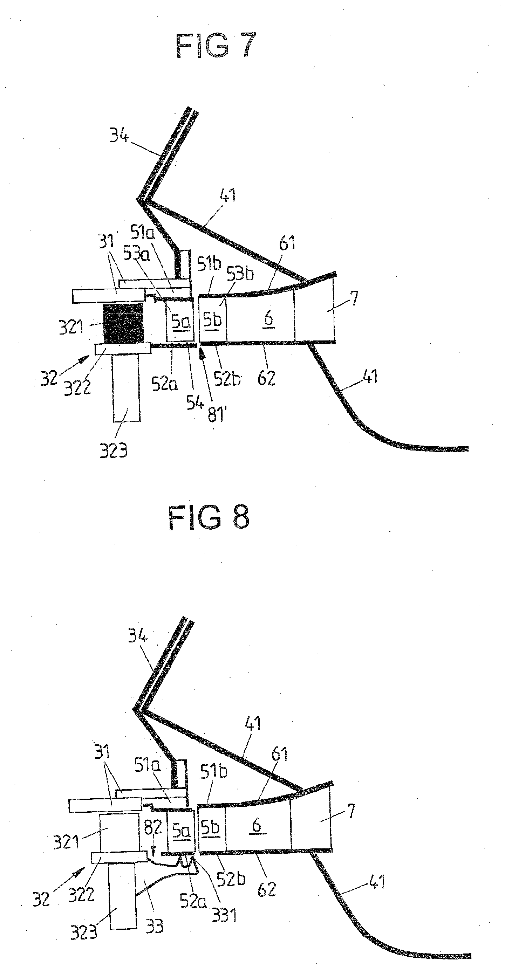

Die Figur 7 zeigt ein Ausführungsbeispiel einer Baugruppe, das sich von den Ausführungsbeispielen der Figuren 4 bis 6 dadurch unterscheidet, dass die beiden Nachleiträder 5a, 5b einer Tandemanordnung nicht beide mit dem Verdichter verbunden sind, sondern nur eines. So ist gemäß der Figur 7 das in Strömungsrichtung axial vordere Nachleitrad 5a der Tandemanordnung mit dem Verdichter verbunden. Hierzu ist ein äußere Gehäuse 51a, in das die Schaufeln 53a einseitig eingespannt ist, mit dem Verdichtergehäuse 31 verbunden oder einteilig mit diesem ausgebildet. Die Nabe 52a dieses Nachleitrads 5a ist ähnlich wie im Ausführungsbeispiel der Figur 6 mit der Rotornabe 322 verbunden und rotierend ausgebildet, wobei zwischen den Enden der Schaufeln 53a und der Nabe 52a ein Nabenspalt 54 ausgebildet ist.

Anders als im Ausführungsbeispiel der Figuren 4 bis 6 ist jedoch das weitere Nachleitrad 5b mit dem Diffusor 6 verbunden. Dies kann dadurch erfolgen, dass die Komponenten, die das zweite Nachleitrad 5b bilden, mit dem Diffusor 6 verbunden (insbesondere verschweißt oder verschraubt) sind, oder dass das zweite Nachleitrad 5b und der Diffusor 6, ggf. zusammen mit Streben 7, einstückig ausgebildet sind, beispielsweise als Gussteil. Letztere Ausführungsvariante ist in der Figur 7 dargestellt. Dabei werden das Außengehäuse 51b und die Nabe 52b des hinteren Nachleitrads 5b durch die gleichen Ringflächen gebildet, die auch den äußeren Diffusorring 61 und den inneren Diffusorring 61 des Diffusors 6 bilden. Der Leckagespalt 81' verläuft nun zwischen den beiden Nachleiträdern 5a, 5b.

Die Ausgestaltung der Figur 7 sieht somit eine geteilte Zuordnung der beiden Nachleiträder 5a, 5b der Tandemanordnung zum Verdichtermodul und zum Brennkammermodul vor.

Die Figur 8 zeigt ein Ausführungsbeispiel, das bis auf den Umstand dem Ausführungsbeispiel der Figur 7 entspricht, dass das in axialer Richtung vordere Nachleitrad 5a eine Nabe 52a ausbildet, die integraler Bestandteil des Nachleitrads 5a ist. Zum Verschließen eines Leckagespaltes 82 zwischen der letzten Rotorstufe 32 und dem ersten Nachleitrad 5a ist ähnlich wie in den Figuren 1 und 4 ein Deckband 33 mit Dichtlippen 331 vorgesehen.

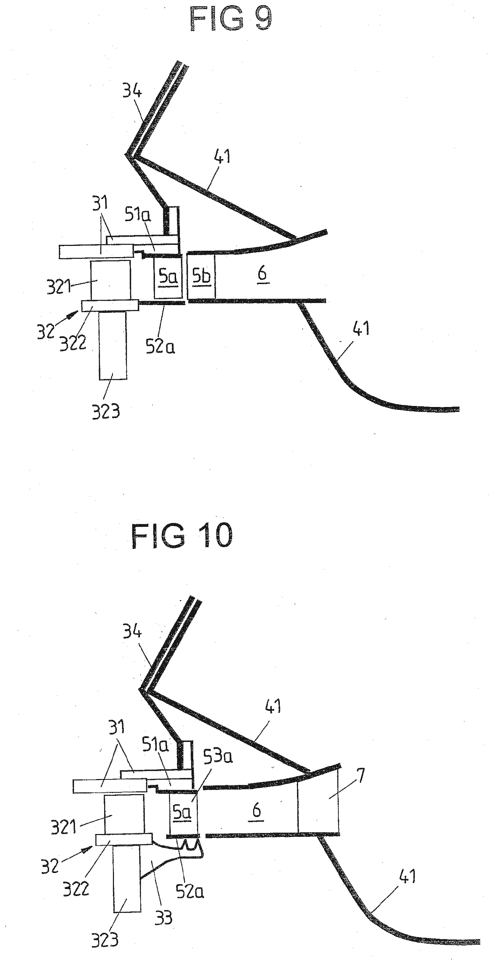

Die Baugruppe der Figur 9 unterscheidet sich von der Baugruppe der Figur 7 durch den Umstand, dass der Diffusor keine integrierten Streben 7 aufweist. Stattdessen ist vorgesehen, dass das zweite, in den Diffusor 6 integrierte Nachleitrad 5b derart ausgebildet ist, dass seine Schaufeln 53b gleichzeitig Streben ausbilden, die zur Aufnahme mechanischer Lasten geeignet sind. Die Schaufeln 53b des Nachleitrads 5b weisen somit nicht nur ein aerodynamisches Profil zum Umlenken der Strömung, sondern auch mechanische Eigenschaften auf.

Die Figur 10 zeigt eine Alternative zum Ausführungsbeispiel der Figur 8, wobei bei diesem Ausführungsbeispiel das zweite Nachleitrad 5b der Figur 8 weggefallen ist. Trotzdem weist das vorhandene Nachleitrad 5a in Strömungsrichtung eine relativ geringe Länge auf. Um dies auszugleichen, ist vorgesehen, dass die Streben 7 ein aerodynamisches Profil aufweisen, das eine weitere Umlenkung des Luftstroms vor Einlass in die Brennkammer herbeiführt. Beim Ausführungsbeispiel der Figur 10 werden somit Umlenkfunktionen, die im Ausführungsbeispiel der Figur 8 das zweite Nachleitrad 5b erfüllt, durch die Streben 7 übernommen. Eine solche Abwandlung kann auch beim Ausführungsbeispiel der Figur 7 erfolgen.

Die Erfindung beschränkt sich in ihrer Ausgestaltung nicht auf die vorstehend dargestellten Ausführungsbeispiele, die lediglich beispielhaft zu verstehen sind. Insbesondere sind die Art der Verbindung des Nachleitrads mit dem Verdichter, die Art der Verbindung des Diffusors mit der Brennkammer und die Ausgestaltungen des Nachleitrads und des Verdichters lediglich beispielhaft zu verstehen.

## Patentansprüche

1. Baugruppe einer Axialturbomaschine, die mindestens ein Nachleitrad (5, 5a, 5b) eines Verdichters und einen in Strömungsrichtung hinter dem Nachleitrad (5, 5a, 5b) angeordneten Diffusor (6) aufweist,
**dadurch gekennzeichnet,**
**dass** das Nachleitrad (5, 5a, 5b) mit dem Verdichter und der Diffusor (6) mit der Brennkammer verbunden ist, wobei zwischen dem Nachleitrad (5, 5a, 5b) und dem Diffusor (6) in Strömungsrichtung ein Leckagespalt (81) ausgebildet ist, so dass zwischen dem Diffusor (6) und dem Nachleitrad (5, 5a, 5b) keine unmittelbare mechanische Verbindung besteht, und wobei das Nachleitrad (5, 5a, 5b) mit einem Au ßengehäuse (31, 51) des Verdichters verbunden ist.

2. Baugruppe nach Anspruch 1, **dadurch gekennzeichnet, dass** der Diffusor (6) mit einem inneren Brennkammergehäuse (41) der Brennkammer verbunden ist.

3. Baugruppe nach Anspruch 1 oder 2, **dadurch gekennzeichnet, dass** das Nachleitrad (5, 5a, 5b) mit einem Nabenspalt (54) ausgeführt ist, der zwischen den Schaufelenden des Nachleitrads (5, 5a, 5b) und der Nabe (52) des Nachleitrads (5, 5a, 5b) verläuft.

4. Baugruppe nach Anspruch 3, **dadurch gekennzeichnet, dass** die Nabe (52) des Nachleitrads (5, 5a, 5b) mit der Rotornabe (322) oder mit der Rotorscheibe (323) eines in Strömungsrichtung vor dem Nachleitrad (5, 5a, 5b) angeordneten Rotors (32) des Verdichters verbunden ist.

5. Baugruppe nach Anspruch 1 oder 2, **dadurch gekennzeichnet, dass** das Nachleitrad (5, 5a, 5b) ohne Nabenspalt zwischen den Schaufelenden des Nachleitrads (5, 5a, 5b) und der Nabe (52) des Nachleitrads (5, 5a, 5b) ausgebildet ist, wobei die Nabe (52) des Nachleitrads (5, 5a, 5b) integraler Bestandteil des Nachleitrads (5, 5a, 5b) ist.

6. Baugruppe nach Anspruch 5, **gekennzeichnet durch** ein Deckband, das einen Leckagespalt (82) zwischen einem in Strömungsrichtung vor dem Nachleitrad (5, 5a, 5b) angeordneten Rotor (32) und dem Nachleitrad (5, 5a, 5b) zumindest teilweise verschließt.

7. Baugruppe nach einem der vorangehenden Ansprüche, **dadurch gekennzeichnet, dass** mindestens zwei Nachleiträder (5a, 5b) in Tandemanordnung in Strömungsrichtung hintereinander angeordnet sind, wobei jedes Nachleitrad (5a, 5b) eine Schaufelreihe (53a, 53b) ausbildet.

8. Baugruppe nach Anspruch 7, **dadurch gekennzeichnet, dass** die mindestens zwei Nachleiträder (5a, 5b) als gesonderte Teile hergestellt und miteinander verschweißt und/oder verschraubt sind.

9. Baugruppe nach Anspruch 7 oder 8, soweit rückbezogen auf Anspruch 3, **dadurch gekennzeichnet, dass** die Schaufelreihen (53a, 53b) beider Nachleiträder (5a, 5b) einseitig am Außengehäuse (31, 51a, 51b) des Verdichters befestigt sind, während die Nabe (52) der Nachleiträder (5a, 5b) mit der Rotornabe (322) oder der Rotorscheibe (323) eines in Strömungsrichtung vor den Nachleiträdern (5a, 5b) angeordneten Rotors (32) verbunden ist.

10. Baugruppe nach Anspruch 7, **dadurch gekennzeichnet, dass** nur eines oder einige der mindestens zwei Nachleiträder (5a) mit dem Verdichter verbunden und mindestens ein Nachleitrad (5b) mit dem Diffusor (6) verbunden oder einstückig mit diesem ausgebildet ist.

11. Baugruppe nach einem der vorangehenden Ansprüche, **dadurch gekennzeichnet, dass** in den Diffusor (6) Streben (7) zur Aufnahme mechanischer Lasten integriert sind.

12. Verfahren zur Herstellung einer Baugruppe einer Axialturbomaschine, die mindestens ein Nachleitrad (5, 5a, 5b) eines Verdichters und einen in Strömungsrichtung hinter dem Nachleitrad (5, 5a, 5b) angeordneten Diffusor (6) umfasst, **gekennzeichnet durch** die Schritte:
- getrenntes Herstellen mindestens eines Nachleitrads (5, 5a, 5b) und des Diffusors (6),
- Verbinden des mindestens einen Nachleitrads (5, 5a, 5b) mit dem Verdichter und Verbinden des Diffusors (6) mit der Brennkammer derart, dass zwischen dem Nachleitrad (5, 5a, 5b) und dem Diffusor (6) in Strömungsrichtung ein Leckagespalt (81) ausgebildet ist, so dass zwischen dem Diffusor (6) und dem Nachleitrad (5, 5a, 5b) keine unmittelbare mechanische Verbindung besteht,
- wobei das mindestens eine Nachleitrad (5, 5a, 5b) mit einem Außengehäuse (31, 51) des Verdichters verbunden wird.

13. Verfahren nach Anspruch 12, **dadurch gekennzeichnet, dass** der Diffusor (6) als Gussteil hergestellt wird.

## Claims

1. Assembly of an axial turbomachine, including at least one outlet guide vane (5, 5a, 5b) of a compressor and a diffuser (6) arranged downstream of the outlet guide vane (5, 5a, 5b) in the flow direction,
**characterized in that**
the outlet guide vane (5, 5a, 5b) is connected to the compressor and the diffuser (6) is connected to the combustion chamber, wherein a leakage gap (81) is provided between the outlet guide vane (5, 5a, 5b) and the diffuser (6) in the flow direction, such that there is no direct mechanical connection between the diffuser (6) and the outlet guide vane (5, 5a, 5b), and wherein the outlet guide vane (5, 5a, 5b) is connected to an outer casing (31, 51) of the compressor.

2. Assembly in accordance with Claim 1, **characterized in that** the diffuser (6) is connected to an inner casing (41) of the combustion chamber.

3. Assembly in accordance with Claim 1 or 2, **characterized in that** the outlet guide vane (5, 5a, 5b) is designed with a hub gap (54) extending between the blade ends of the outlet guide vane (5, 5a, 5b) and the hub (52) of the outlet guide vane (5, 5a, 5b).

4. Assembly in accordance with Claim 3, **characterized in that** the hub (52) of the outlet guide vane (5, 5a, 5b) is connected to the rotor hub (322) or the rotor disk (323) of a compressor rotor (32) arranged upstream of the outlet guide vane (5, 5a, 5b) in the flow direction.

5. Assembly in accordance with Claim 1 or 2, **characterized in that** the outlet guide vane (5, 5a, 5b) is designed without hub gap between the blade ends of the outlet guide vane (5, 5a, 5b) and the hub (52) of the outlet guide vane (5, 5a, 5b), with the hub (52) of the outlet guide vane (5, 5a, 5b) forming an integral part of the outlet guide vane (5, 5a, 5b).

6. Assembly in accordance with Claim 5, **characterized by** a shroud that at least partially closes a leakage gap (82) between a rotor (32) arranged upstream of the outlet guide vane (5, 5a, 5b) in the flow direction and the outlet guide vane (5, 5a, 5b).

7. Assembly in accordance with one of the preceding Claims, **characterized in that** at least two outlet guide vanes (5a, 5b) are provided in tandem arrangement one behind the other in the flow direction, with each outlet guide vane (5a, 5b) forming a blade row (53a, 53b).

8. Assembly in accordance with Claim 7, **characterized in that** the at least two outlet guide vanes (5a, 5b) are manufactured as separate parts and welded and/ or bolted to one another.

9. Assembly in accordance with Claim 7 or 8, if related to Claim 3, **characterized in that** the blade rows (53a, 53b) of both outlet guide vanes (5a, 5b) are fastened to the outer casing (31, 51a, 51b) of the compressor on one side, whereas the hub (52) of the outlet guide vanes (5a, 5b) is connected to the rotor hub (322) or to the rotor disk (323) of a rotor (32) arranged upstream of the outlet guide vanes (5a, 5b) in the flow direction.

10. Assembly in accordance with Claim 7, **characterized in that** only one or several of the at least two outlet guide vanes (5a) is/ are connected to the compressor, and at least one outlet guide vane (5b) is connected to the diffuser (6) or is designed in one piece with the latter.

11. Assembly in accordance with one of the preceding Claims, **characterized in that** struts (7) are integrated into the diffuser (6) for absorbing mechanical loads.

12. Method for manufacturing an assembly of an axial turbomachine, including at least one outlet guide vane (5, 5a, 5b) of a compressor and a diffuser (6) arranged downstream of the outlet guide vane (5, 5a, 5b) in the flow direction, **characterized by** the following steps:
- separate manufacture of at least one outlet guide vane (5, 5a, 5b) and of the diffuser (6),
- connecting the at least one outlet guide vane (5, 5a, 5b) to the compressor and connecting the diffuser (6) to the combustion chamber such that a leakage gap (81) is provided between the outlet guide vane (5, 5a, 5b) and the diffuser (6) in the flow direction, without there being a direct mechanical connection between the diffuser (6) and the outlet guide vane (5, 5a, 5b), wherein the at least one outlet guide vane (5, 5a, 5b) is connected to an outer casing (31, 51) of the compressor.

13. Method in accordance with Claim 12, **characterized in that** the diffuser (6) is manufactured as a casting.

## Revendications

1. Sous-ensemble d'une turbomachine axiale qui présente au moins une aube directrice de sortie (5, 5a, 5b) d'un compresseur et un diffuseur (6) disposé en aval de l'aube directrice de sortie (5, 5a, 5b) dans le sens d'écoulement,
**caractérisé en ce que**
l'aube directrice de sortie (5, 5a, 5b) est reliée au compresseur et que le diffuseur (6) est relié à la chambre de combustion, sachant qu'une fente de fuite (81) est constituée entre l'aube directrice de sortie (5, 5a, 5b) et le diffuseur (6) dans le sens d'écoulement de sorte qu'il n'existe aucune liaison mécanique directe entre le diffuseur (6) et l'aube directrice de sortie (5, 5a, 5b) et sachant que l'aube directrice de sortie (5, 5a, 5b) est reliée à un carter extérieur (31, 51) du compresseur.

2. Sous-ensemble selon la revendication n° 1, **caractérisé en ce que** le diffuseur (6) est relié à un carter intérieur (41) de la chambre de combustion.

3. Sous-ensemble selon la revendication n° 1 ou n° 2, **caractérisé en ce que** l'aube directrice de sortie (5, 5a, 5b) est conçue avec une fente de moyeu (54) qui s'étend entre les extrémités d'aubes de l'aube directrice de sortie (5, 5a, 5b) et le moyeu (52) de l'aube directrice de sortie (5, 5a, 5b).

4. Sous-ensemble selon la revendication n° 3, **caractérisé en ce que** le moyeu (52) de l'aube directrice de sortie (5, 5a, 5b) est relié au moyeu de rotor (322) ou au disque de rotor (323) d'un rotor (32) du compresseur, disposé en amont de l'aube directrice de sortie (5, 5a, 5b) dans le sens d'écoulement.

5. Sous-ensemble selon la revendication n° 1 ou n° 2, **caractérisé en ce que** l'aube directrice de sortie (5, 5a, 5b) est conçue sans fente de moyeu entre les extrémités d'aubes de l'aube directrice de sortie (5, 5a, 5b) et le moyeu (52) de l'aube directrice de sortie (5, 5a, 5b), sachant que le moyeu (52) de l'aube directrice de sortie (5, 5a, 5b) fait partie intégrante de l'aube directrice de sortie (5, 5a, 5b).

6. Sous-ensemble selon la revendication n° 5, **caractérisé par** une virole qui obture au moins partiellement une fente de fuite (82) entre un rotor (32) disposé en amont de l'aube directrice de sortie (5, 5a, 5b) dans le sens d'écoulement et l'aube directrice de sortie (5, 5a, 5b).

7. Sous-ensemble selon une des revendications précédentes, **caractérisé en ce qu'**au moins deux aubes directrices de sortie (5a, 5b) sont disposées l'une derrière l'autre en tandem dans le sens d'écoulement, sachant que chaque aube directrice de sortie (5a, 5b) constitue une rangée d'aubes (53a, 53b).

8. Sous-ensemble selon la revendication n° 7, **caractérisé en ce que** lesdites au moins deux aubes directrices de sortie (5a, 5b) sont fabriquées comme pièces distinctes, puis soudées et/ ou vissées ensemble.

9. Sous-ensemble selon la revendication n° 7 ou n° 8, pour autant que rattachée a la revendication n° 3, **caractérisé en ce que** les rangées d'aubes (53a, 53b) des deux aubes directrices de sortie (5a, 5b) sont fixées d'un côté au carter extérieur (31, 51a, 51b) du compresseur, tandis que le moyeu (52) des aubes directrices de sortie (5a, 5b) est relié au moyeu de rotor (322) ou au disque de rotor (323) d'un rotor (32) disposé en amont des aubes directrices de sortie (5a, 5b) dans le sens d'écoulement.

10. Sous-ensemble selon la revendication n° 7, **caractérisé en ce que** seul une ou plusieurs desdites au moins deux aubes directrices de sortie (5a) est/ sont reliée(s) au compresseur et qu'au moins une aube directrice de sortie (5b) est reliée au diffuseur (6) ou est formée d'un seul tenant avec celui-ci.

11. Sous-ensemble selon une des revendications précédentes, **caractérisé en ce que** des montants (7) sont intégrés au diffuseur (6) pour absorber des charges mécaniques.

12. Procédé destiné à fabriquer un sous-ensemble d'une turbomachine axiale qui comprend au moins une aube directrice de sortie (5, 5a, 5b) d'un compresseur et un diffuseur (6) disposé en aval de l'aube directrice de sortie (5, 5a, 5b) dans le sens d'écoulement, **caractérisé par** les étapes suivantes:
- fabriquer séparément au moins une aube directrice de sortie (5, 5a, 5b) et le diffuseur (6),
- relier l'au moins une aube directrice (5, 5a, 5b) au compresseur et relier le diffuseur (6) à la chambre de combustion de sorte qu'est constituée une fente de fuite (81) entre l'aube directrice de sortie (5, 5a, 5b) et le diffuseur (6) dans le sens d'écoulement, et qu'il n'existe aucune liaison mécanique directe entre le diffuseur (6) et la roue directrice de sortie (5, 5a, 5b), sachant que ladite au moins une aube directrice de sortie (5, 5a, 5b) est reliée à un carter extérieur (31, 51) du compresseur.

13. Procédé selon la revendication n° 12, **caractérisé en ce que** le diffuseur (6) est fabriqué en tant que pièce coulée.
